# NEW EUROPEAN PATENT SPECIFICATION

(11) **EP 0 563 760 B2**
(45) Date of publication and mention of the opposition decision: **12.05.1999**
(45) Mention of the grant of the patent: 28.08.1996
(21) Application number: 93104793.0
(22) Date of filing: 23.03.1993
(51) Int. Cl.: F02D 41/40, F02D 41/20

(54) **Fuel-injection device**
Kraftstoff-Einspritzvorrichtung
Dispositif d'injection de carburant

(30) Priority: 26.03.1992 JP 100686/92; 26.03.1992 JP 100687/92; 26.03.1992 JP 100688/92; 26.03.1992 JP 100689/92
(43) Date of publication of application: 06.10.1993
(60) Divisional application: 95105008.7
(73) Proprietor: ZEXEL CORPORATION, Toshima-ku, Tokyo 170 (JP)
(72) Inventor: Takashi, Ohishi, Saitama (JP); Mitsuhiro, Fujita, Saitama (JP); Satoshi, Yajima, Saitama (JP)
(74) Representative: von Rohr, Hans Wilhelm, Dipl.-Phys.

(56) References cited:
- WO-A-89/11034
- DE-A- 3 733 091
- DE-A- 3 843 138
- US-A- 4 535 743
- PATENT ABSTRACTS OF JAPAN, unexamined applications, M field, vol. 12, no. 227, June 28, 1988 THE PATENT OFFICE JAPANESE GOVERNMENT page 19 M 713
- SAE-Paper 861049

## Description

### 1. Field of the Invention

The present invention pertains to a fuel-injection device, wherein the injection level of fuel to be supplied to the combustion engine is adjusted by an opening/closing control of the solenoid valve installed at some point along the fuel supplying passage leading to the compressor of the fuel-injection pump.

### 2. Related Art

Among this type of fuel-injection devices, for example, one of the well-known ones is introduced in JP - A - 63-21346. In this device, since the injection level is determined by the time length while a valve is actually closed (actual valve closed-time length), the time point when the valve of solenoid valve seats on the seat is detected, and the actual valve closed-time length after the valve's seating is counted.

Therefore, on this fuel-injection device, a closed-valve detection unit is provided that detects the time point when the solenoid valve closes in response to the charging of driving pulse, and this actual valve's closing detection unit has a voltage-detecting circuit to obtain voltage signals corresponding to the waveform of the flowing current, in response to the driving pulse, in the solenoid valve's excited coil, and a differentiating circuit is provided to differentiate the output voltage from the voltage-detecting circuit.

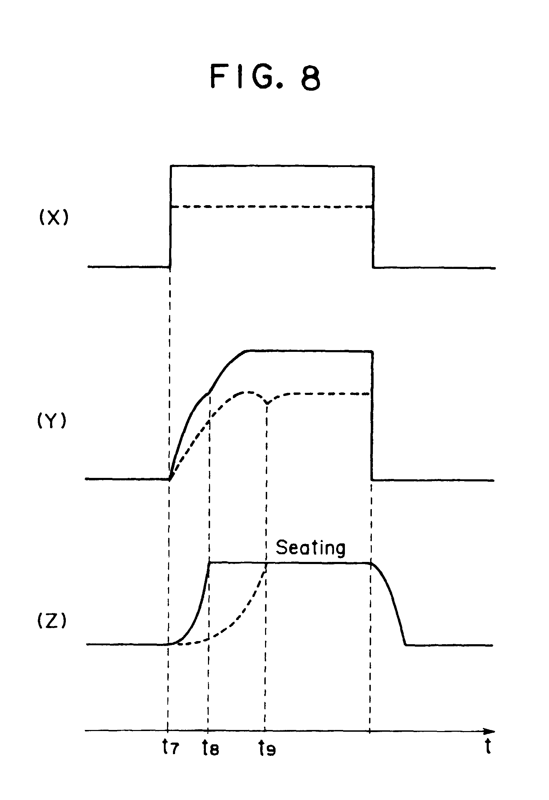

In the aforementioned reference, if the voltage (for charging the pulse) is raised to minimize a response delay in the solenoid valve's seating, as shown by the real line (X) in Fig. 8, the time length required for the solenoid valve to be seated is shortened, as shown by t₇ - t₈ and the real line (Z) in Fig. 8, but the change in the current value does not clearly indicate the change that occurs when the valve is seated, as shown by the real line (Y) in Fig. 8, and the responsiveness is poor.

On the other hand, if the voltage for charging the pulse is lowered to make it easier to detect the time point when the solenoid valve is seated, as shown by the dotted line (X) in Fig. 8, the change in the current flow at the time of valve's seating becomes more visible, as shown by the dotted line (Y) in Fig. 8, therefore, is easier to detect, but the time length until the valve is seated becomes longer as shown by t₇ - t₉, which shows poor responsiveness.

There is a fuel injector and controller according to WO - A - 89/11034 which deals with the control of a solenoid valve controlling a Diesel injector, which has a control pulse sequence for repeatedly occuring control pulses with high duty and low duty pulse segments.

The objective of the present invention is to offer a fuel-injection device which can easily detect the valve's seating time while securing the solenoid valve's responsiveness.

The objective is implemented by the fuel-injection pump of claim 1.

Accordingly, the driving pulse is composed of the driving pulse with a large duty ratio in the forced time length, and of the driving pulse with a small duty ratio in the limited time length, and the solenoid valve is driven by this driving pulse: therefore, the solenoid valve's responsiveness is improved by the forced time length of large duty ratio, and, simultaneously the seating time point in the current waveform detected by the current waveform detecting means can be made to be more visible by the limited time length of small duty ratio. The detection of the seating, thus, can be done easily with the seating detection means.

### BRIEF DESCRIPTION OF THE DRAWINGS

- Fig. 1: shows a sectional view of the structure of the fuel- injection device in preferred embodiment of the present invention.
- Fig. 2: is a functional diagram illustrating the control mechanism of the fuel-injection device in preferred embodiment of the present invention.
- Fig. 3: shows a circuit diagram of the driving circuit in preferred embodiment of the present invention
- Fig. 4: shows a time chart of the driving circuit.
- Fig. 5: shows a time chart illustrating the actual driving pulse, the voltage equivalent to current, and the motion of the valve.
- Fig. 6: shows a circuit diagram of the driving circuit in preferred embodiment of the present invention.
- Fig. 7: shows a time chart of the driving circuit.
- Fig. 8: is a time chart showing the driving voltage (X), driving current (Y), and valve's motion (Z) in prior art.

The following explanation is given on the preferred embodiment of the present invention with reference to the drawings.

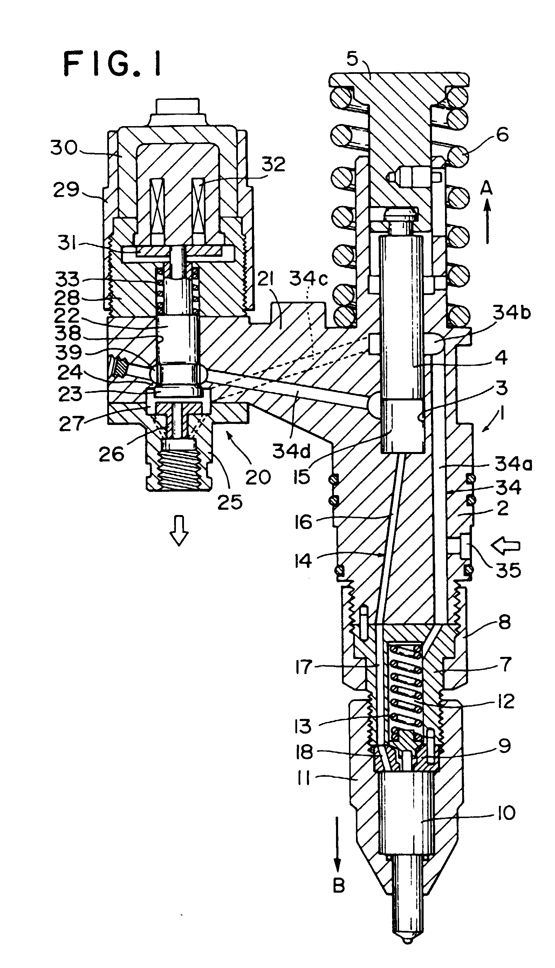

In Fig. 1, the fuel-injection device has a unit injector type fuel-injection pump 1, for example, a fuel-injection pump that supplies a fuel by injection to each cylinder of diesel engine, and on the base of plunger barrel 2 of this injection pump 1, cylinder 3, in which plunger 4 is slidably inserted, is formed. On plunger barrel 2, a spring receptacle is formed, and between the spring receptacle of plunger barrel 2 and tappet 5 connected with plunger 4, spring 6 is included, by which plunger 4 is constantly pushed away from plunger barrel 2 (direction indicated by an arrow A in the figure). Tappet 5 is contacted with a cam formed on a driving shaft not shown in the figure, and the driving shaft rotates, while being connected to the engine, reciprocates plunger 4 in cooperation with the aforementioned spring 6 in cylinder 3. By this reciprocating motion of plunger 4, compressor 15 takes in the fuel and compresses it as well.

On the edge of plunger barrel 2, holder 7 is mounted, with screwing holder nuts 8, to secure holder 7 on the circumference of plunger barrel 2, and on this holder 7, nozzle 10 is mounted via spacer 9: these spacer 9 and nozzle 10 are secured to the end of holder 7 with retaining nut 11 fastened to their exterior surfaces and screwed to the circumference of the end of holder 7. On holder 7, spring case 12 is formed, and by nozzle spring 13 accommodated in spring case 12, a needle valve of the nozzle, not shown in the figure, is pushed toward the tip of the nozzle (direction shown by B arrow in the figure). The structure of the nozzle is a well- known one, and its needle valve is opened when a high-pressure fuel is supplied via high-pressure passage 14 mentioned below, so that the fuel is injected from injection hole made in the tip of the nozzle.

High-pressure passage 14 consists of passage 16 formed inside plunger barrel 2, with its one end opened into compressor 15, passage 17 formed in holder and leading to passage 16, passage 18 formed in spacer 9 and leading to passage 17, and of a passage (not shown in the figure) formed in nozzle 10 and leading to passage 18.

On one side of plunger barrel 2, valve housing 21 in which solenoid valve 20, mentioned later, is installed is integrally installed and extended, and on the plunger barrel and on valve housing 21, fuel-supplying passage 34 to supply the fuel to the aforementioned compressor 15 is installed. This fuel-supplying passage 34 consists of: first fuel-supplying passage 34a, to which the fuel is supplied from fuel-intake 35 formed on the side of plunger barrel 2: loop-shaped channel 34b connected to this first fuel-supplying passage 34a and formed on one part of cylinder 3 on which plunger 4 is constantly sliding; second fuel-supplying passage 34c connected to this loop-shaped channel 34b and leading to valve case 27 of solenoid valve 20: third fuel-supplying passage 34d, one end of which is connected to loop-shaped groove 39 made around rod 22 so as to lead to valve case 27 via the valve, and other end of which is connected to the aforementioned compressor 15.

The supply of the fuel to compressor 15 is adjusted by solenoid valve 20, and rod 22 of this solenoid valve 20 is slidably inserted in sliding hole 38 made in valve housing 21. On valve housing 21, valve seat 24 formed on the tip of rod 22 and contacted with poppet valve 23 is mounted, and header 25 is screwed to valve housing 21 to cover valve 23. On the plane where header 25 and valve housing 21 contact with each other, valve case 27 is formed surrounded by header 25 and valve housing 21, and on this valve case 27, stopper 26 of the valve is secured on the side of header 25 so as to face valve 23.

Rod 22 is inserted through holder 28 that is screwed to the opposite side of header 25 of valve housing 21, and is connected to armature 31 positioned between the holder 28 and solenoid barrel 30 fastened to holder 28 with holder nut 29. This armature 31 is facing solenoid 32 held in solenoid barrel 30. In the aforementioned holder 28, spring 33 constantly pushing valve 23 away from valve seat 24 is accommodated: valve 23 normally stays apart from valve seat 24, and the valve 23 is driven to be brought into contact with valve seat 24 when armature 31 is attracted to solenoid 32 by the current conduction to solenoid 32.

The diameter of rod 22 is slightly smaller in front of valve 23, and loop-shaped groove 39 having a large diameter than that is formed to face the portion of the rod with the smaller diameter. This loop-shaped groove 39 is connected to the aforementioned fuel-supplying passage 34d. To the aforementioned valve case 27, as mentioned earlier, second fuel-supplying passage 34c is connected, and the fuel is constantly supplied to fill valve case 27 via fuel-supplying passage 34c. Therefore, when valve 23 is moved away from valve seat 24, and plunger 4 is taking the fuel in, the fuel filled in valve case 27 reaches loop-shaped groove 39 through the space between rod 22 and sliding hole 38, and is supplied from this loop-shaped groove 39 to compressor 15 via third fuel-supplying passage 34d. The fuel supplying-pressure at this time is approximately 5 kg/cm².

When solenoid is conducted, in other words, at the time point when valve 23 is seated on valve seat 24, fuel-supply passage 34 is shut off by solenoid valve 20, and the fuel which has been already supplied to compressor 15 is compressed, by the compressing process of the aforementioned plunger 4, to be supplied to nozzle 10 via high-pressure passage 14. This pressure transport of the fuel is completed when the conduction to solenoid 32 is stopped, a part of the high-pressure fuel on the high-pressure side (high-pressure passage 14, compressor 15, and third fuel-supplying passage 34d) is retumed to valve case 27 upon valve 23's moving away from valve seat 24, and the fuel-pressure in the compressor is reduced.

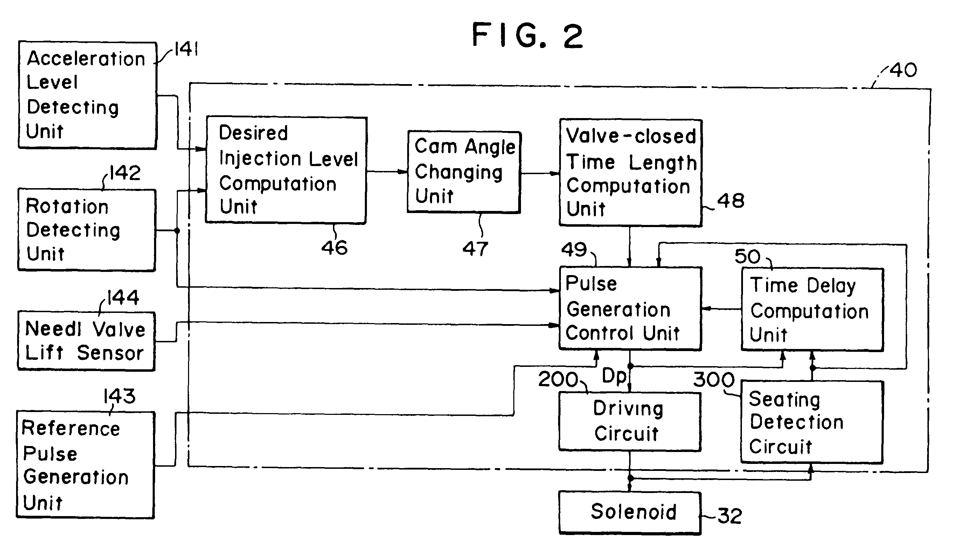

The conduction to the aforementioned solenoid 32 is controlled by control unit 40, as shown in Fig. 2. Control unit 40 consists of an A/D converter not shown in the figure, multiplexer, microcomputer, driving circuit 200 mentioned below, and of seating detection circuit 300, and in this control unit 40, each signals are input from each of acceleration level detecting unit 141 to detect the level of pushing the acceleration pedal (acceleration level), engine rotation detecting unit 142, reference pulse generating unit 143 which is attached to the driving shaft and generates pulses every time the driving shaft reaches the reference angle position, and from needle valve lift sensor 144 to detect the time point of the needle valve's lifting.

Fig. 2 shows, for convenience, a functional diagram for the processes carried out in the aforementioned control unit 40. The processes carried out in control unit 40 are explained below with reference to this diagram. The output signals from acceleration level detecting unit 141 and engine rotation detecting unit 142 are input in the desired injection level computation unit 46, and based on these input signals, the most desirable injection level suitable for the then driving conditions of the engine is computed from the map data and is put out as the desired injection level signals.

Cam angle converter 47 inputs the aforementioned desired injection signals, computes, based on the specific map data, the cam angle necessary to obtain the aforementioned most desirable injection level, according to the engine rotation number, and puts out the result as cam angle signals.

Valve-closed time length computation unit 48, receiving the aforementioned cam angle signals, converts the cam angle signals to the time necessary for the cam to rotate by the cam angle computed at cam angle conversion unit 47. In other words, at this unit, the necessary time length (the valve-closed time length) T_{q}, from the time point when solenoid valve closes and the injection begins until the time point when the desired injection amount has been injected, is computed.

The valve-closed time length T_{q} computed at this unit does not include the time delay Tᵥ that is the time length during which valve 23 remaining apart from valve seat 24 begins to move and completely is seated on valve seat 24. Therefore, the driving pulse width Td which is actually necessary to drive solenoid valve 20 consists of the sum of T_{q} and Tᵥ (T_{d} = T_{q} + Tᵥ).

Pulse generation control unit 49 adds the valve-closed time length T_{q} computed at the aforementioned valve-closed time length computation unit 48 to the time delay Tᵥ computed at time delay computation unit 50, and determines the time to put out the driving pulse Dₚ having the driving pulse width Td determined by the sum of T_{q} and Tᵥ, to driving circuit 200: more specifically, it determines the most adequate timing to start the fuel-injection, on the bases of the reference signals generated from reference pulse generating unit 143, the injection timing signals generated from needle valve lift sensor 144, and the rotation signals generated from rotation detecting unit 142.

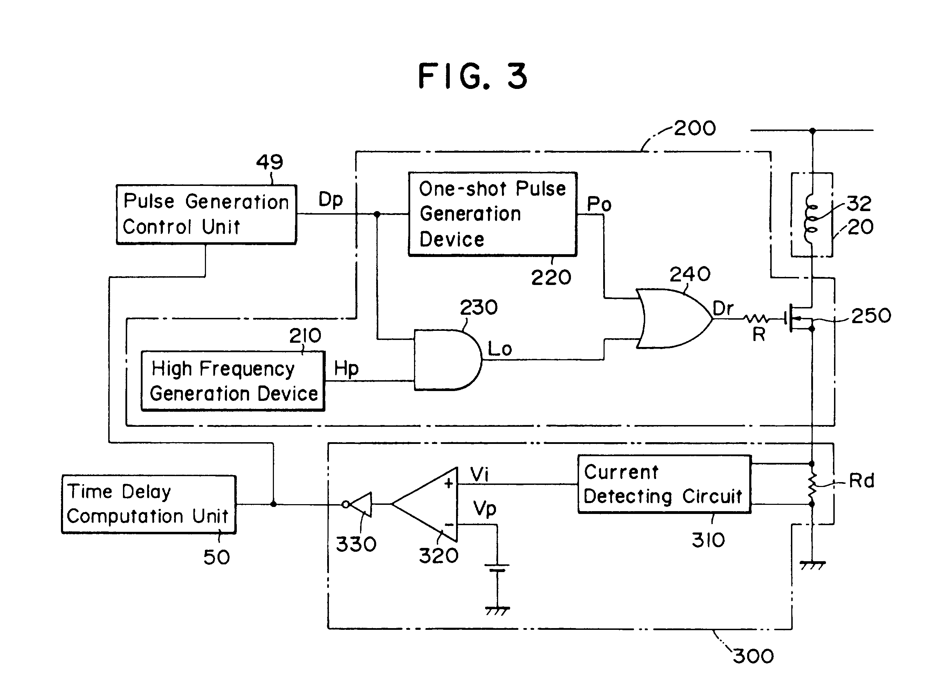

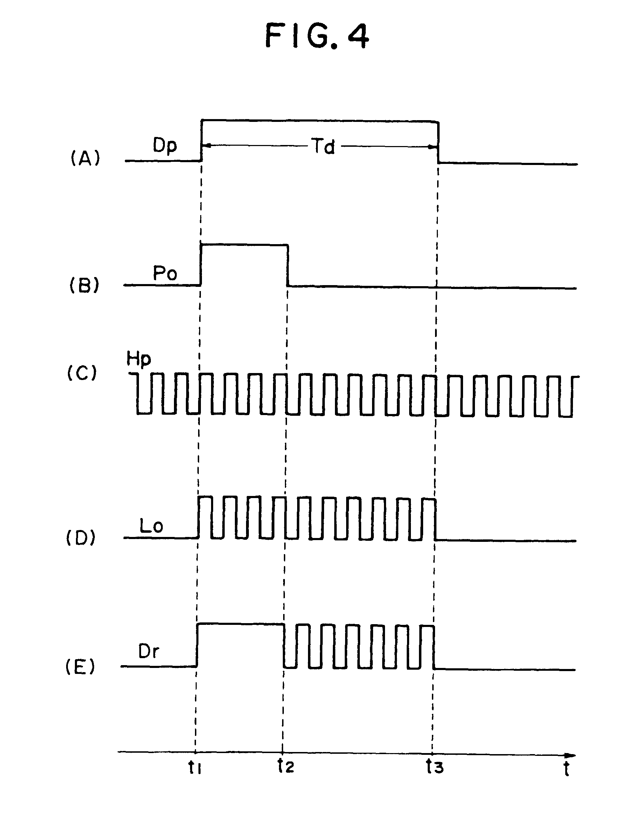

Driving circuit 200 consists of high-frequency generation device 210, one-shot-pulse generation device 220, AND circuit 230, OR circuit 240, and electric field effect type transistor (FET) 250, as specifically shown in Fig. 3, and the driving pulse Dₚ (shown in Fig. 4 (A)) generated from the aforementioned pulse generation control unit 49 is input in the aforementioned one-shot-pulse generation device 220. and in one of the input terminals of AND circuit 230.

One-shot-pulse generation device 220 generates pulse PO having a large duty ratio (100 % in this case), shown by the specific time length (t₁ - t₂) from the time point when the driving pulse Dₚ rises, as shown in Fig. 4 (B). This specific time length is preliminarily defined on the bases of the experiments.

In AND circuit 230, high-frequency waves Hp are input as well as the aforementioned driving pulse Dₚ, as shown in Fig. 4 (C) from high-frequency wave generation device 210, and thereby AND circuit 230 puts out pulse Lₒ which becomes high-frequency waves only for the time length t₁ - t₃, as shown in Fig. 4 (D).

The pulse Pₒ put out from the aforementioned one-shot-pulse generation device 220 and the pulse Lₒ put out from AND circuit 230 are input in OR circuit 240, and thereby, as shown in Fig. 4 (E), the actual driving pulse Dr having a large duty ratio in the time length t1-t2 (forced time length) and a small duty ratio in the time length t₂-t₃ (limited time length) is put out from OR circuit 240.

This actual driving pulse Dr is input in the gate of FET 250 via resistor R, and by this actual driving pulse Dᵣ the drain and the source in FET 250 are conducted to each other to supply the current to solenoid 32 and to drive valve 23 in direction of closing.

Accordingly, since the actual driving pulse is composed of the driving pulse having a large duty ratio in the forced time length and of the driving pulse having a small duty ratio in the limited time length, the motion of valve 23 can be accelerated by the pulse having a large duty ratio in the beginning of solenoid valve 20's driving when greater driving force is needed, and during the subsequent time period after the beginning of the valve's driving when the valve's closing needs to be detected, the actual voltage can be lowered by the pulse having a small duty ratio so as to make a changing point of the current (an inflection point in the current) more visible at the time of valve 23's seating.

Seating detection device 300 detects the valve 23's seating by detecting the curving point of the current generated when valve 23 seats in valve seat 24, and it consists of the resistor Rd, connected in series to solenoid 32, current detecting circuit 310 to detect the current by detecting the voltage on both sides of this resistor, comparator 320 to compare the voltage Vi corresponding to this detected current with the threshold voltage Vₚ, and invertor 330.

When the actual driving pulse Dr is charged in this seating detection device 300, the current flowing in solenoid 32 flows through the resistor Rd, and is detected at current detecting circuit 310, where the current is converted to the voltage value Vi corresponding to the current value to be input in the non inverting terminal of comparator 320.

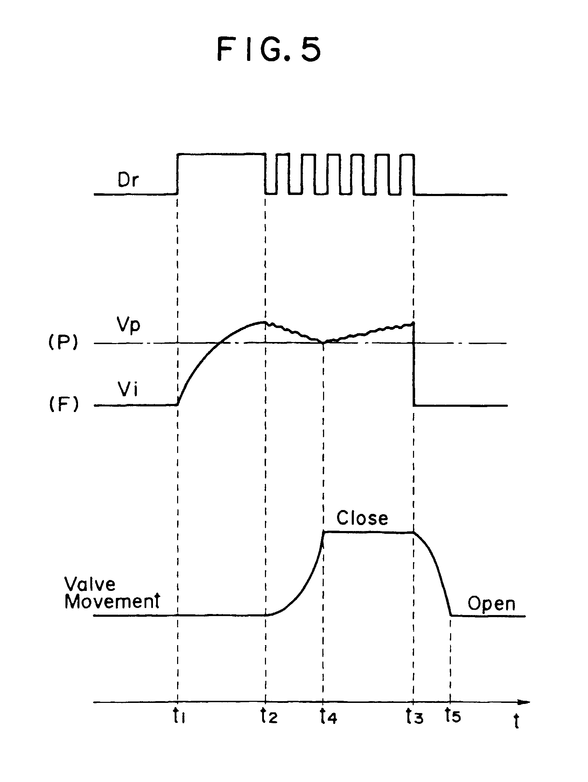

This voltage value Vi gradually rises during the time forced length (t1 - t2), and gradually declines during the limited time length (t2 t3), until the seating time point (t4), being followed by the gradual increase that continues from the time point at which the seating begins until its completion (t3), as shown in Fig. 5 (F). The solenoid valve's seating time point can be, thus, detected from the characteristic that the current inflection point is formed at the time when solenoid valve 20 is seated.

In other words, in the inverting terminal of the aforementioned comparator 320, the threshold voltage Vₚ having a specific level of voltage is input, and from this comparator 320, the seating signals are supplied to the time delay computation unit 50 and pulse generation control unit 49, since the output becomes L at the time point (t4) when the aforementioned voltage value Vi becomes lower than the threshold voltage Vₚ, and the output of invertor 330 becomes H. In an example of the preferred embodiment of the present invention, the minimal point (inflection point) caused by the valve 23's seating was judged from the voltage, but the current inflection point for the seating may be judged by the differentiating signal by installing a differentiating circuit.

As to the computation of the time delay in valve's closing Tᵥ, derived from the motion of the valve, and computed in the time delay computation unit 50, its timing begins, as soon as the driving pulse is input in the time delay computation unit 50, at the point when the Dₚ rises, and ends at the point when the seating signal put out from seating detection circuit 300 is input.

The time length of valve 23's being pushed away from valve seat 24, that is shown by t3 - t5 in Fig. 5, is defined by the pushing force of spring 33.

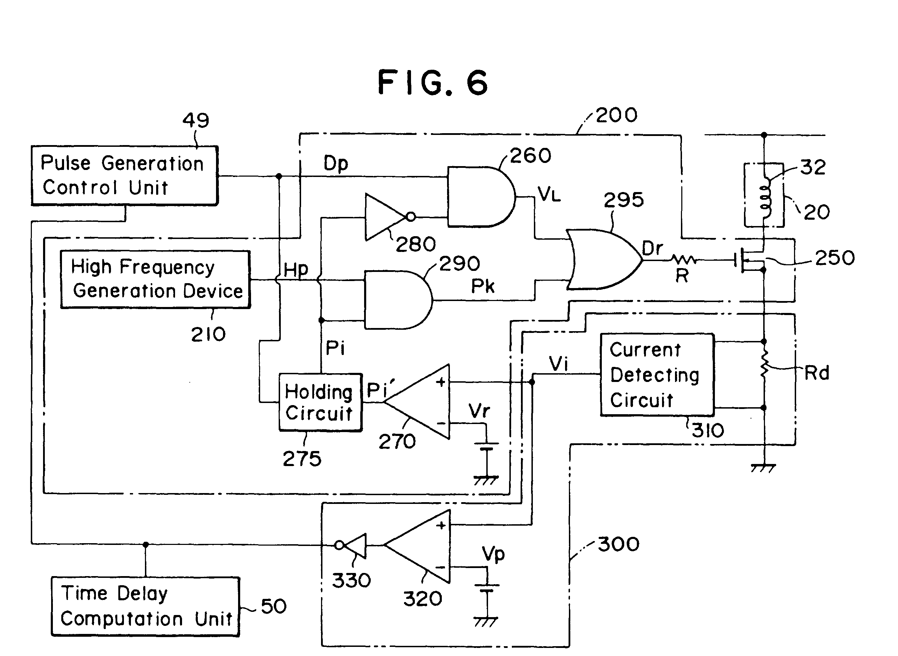

Other example of the preferred embodiment of the present invention is explained below with reference to Fig. 6. The same components as shown in the aforementioned example are identified by the same number.

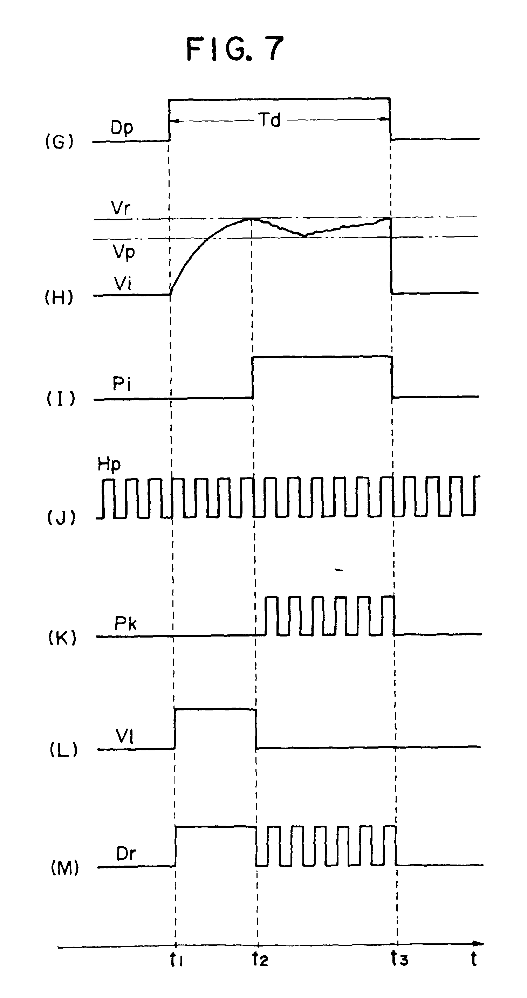

The driving circuit 200 of this example consists of high- frequency generation device 210, two AND circuits 260, 290, OR circuit 295, resistor R, FET 250, comparator 270, and of invertor 280. With this driving circuit 200, the driving pulse Dₚ (Fig. 7 (G)) put out from the aforementioned pulse generation control unit 49 is input in one end of AND circuit 260. In the other end of this AND circuit 260, signal Pi shown in Fig. 7 (I) is input via invertor 280. This signal Pi is formed at holding circuit 275, where driving pulse Dₚ put out from pulse generation control unit 49 is input, as well as the signal Pi' that is put out from comparator 270 when the voltage Vi (Fig. 7 (H)) corresponding to the current flowing in solenoid 32 put out from current detecting circuit 310 in seating detection circuit 300 becomes higher than the voltage Vr. This holding circuit 275, once the signal Pi' is input, defines its output signal, at this point, as Hi, and forms the signal Pi by retaining this condition until the completion time of the driving pulse Dₚ.

Thereby, the output signal V_{L} (Fig. 7 (L)) of AND circuit 260 forms a rectangular waveform having a duty ratio 100% for the time length t1 ~ t2, and is input in one end of OR circuit 295. In the other end of OR circuit 295, high-frequency signal Pk (Fig. 7 (k)) that becomes high-frequency waves only for the limited time length (t2 - t3) that is formed when high-frequency waves Hp (Fig. 7 (J)) put out from the aforementioned high-frequency wave generation device and the aforementioned signal Pi is input in AND circuit 290. Thus, the same actual driving pulse Dr as in the aforementioned example can be obtained from the output of OR circuit 295.

In this driving circuit 200, unlike the aforementioned example, wherein the driving circuit's forced time length was defined as a specific time length form the result of the experiments, a specific consideration for defining the forced time length is not necessary, since the forced time length ends when the current reaches or exceeds a specific value.

As explained above, according to the present invention, the forced time length wherein the duty ratio of the driving pulse supplied to the solenoid is large and the limited time length wherein the duty ratio is small are established; therefore, the responsiveness of the solenoid valve can be improved to be faster by the driving pulse having the large duty ratio during the forced time length, and the detection of the solenoid valve's seating can be performed definitely by the driving pulse having the small duty ratio during the limited time length.

## Claims

1. A fuel-injection pump (1) at least having a compressor (15) installed inside a cylinder (3) wherein a plunger (4) is slidably inserted, a high-pressure passage (14) guiding the fuel in the compressor (15) to a nozzle (10), and a fuel-supplying passage (34) supplying the fuel supplied from a low pressure fuel intake side to said compressor (15), and a solenoid valve (20) installed in the fuel-supplying passage (34) between the high-pressure side and the low-pressure side, capable of closing the passage between the high-pressure and the low-pressure side, and said fuel-injection pump's injection amount is adjusted by opening/closing said solenoid valve (20), this fuel-injection pump (1) further comprises:
a desired injection level computation means (46) to compute an output time; a driving pulse forming means (200) to form during one solenoid valve closure motion a driving pulse (Dᵣ) composed of a driving pulse segment (Pₒ) having a large duty ratio during a first time length, and of a driving pulse segment (Lₒ) having a small duty ratio in a following time length, within the solenoid valve's driving time length determined by the aforementioned output time;
a solenoid valve driving means (240) to drive the solenoid valve (20) by the driving pulse formed by this driving pulse forming means (200); a current waveform detecting means (310) to detect the current waveform supplied to the solenoid valve (20) by this solenoid valve driving means (240); a seating detection means (300) to detect the time point of the solenoid valve's seating from this current waveform; wherein the detection of the solenoid valve's seating is performed definitely by the driving pulse having the small duty ratio during the following time length.

2. A fuel-injection pump as recited in claim 1, wherein the time delay in valve's closing required for the valve (23) to shut off the fuel-supplying passage (34) is determined by detecting an inflection point of the current supplied to the solenoid (32) that occurs at the time point when the valve (23) seats on the valve seat (24), and by counting the time length from the time point when the pulse to drive the solenoid valve (20) is put out until the time point when the valve (23) is seated.

3. A fuel-injection pump as recited in claim 1 or 2, having a first generator (220) generating the pulse (Pₒ) having a large duty ratio at specific time intervals, for a specific time period, and a second generator (210) generating the pulse (Lₒ) having a duty ratio smaller than that of the pulse (Pₒ) generated from said first generator (220), wherein the pulse (Lₒ) put out from the second generator (210) during said solenoid valve's driving period and the pulse (Pₒ) put out from the first generator (220) are input in an OR circuit (240) to form a forced time length and a limited time length for the driving pulse (Dᵣ).

4. A fuel-injection pump as recited in claim 3, wherein the forced time length of the driving pulse (Dᵣ) ends when the supplied current to the solenoid (32) exceeds a specific value.

5. A fuel-injection pump as recited in any preceding claim, wherein the valve-closed time length is determined by computing a desired injection level based on a pushing level of acceleration pedal and engine rotation condition, by converting the computed desired injection level to a cam angle necessary to obtain the injection level, and subsequently, by computing the time necessary for the cam to rotate by the cam angle.

6. A fuel-injection pump as recited in any preceding claim, wherein the solenoid valve (20) is extendedly installed on the side of the injection pump (1), and inserted is a slidable rod (22) with the valve (23), a valve housing (21) has a valve seat (24) for the valve (23) to be seated on, a header (25) is mounted on the valve housing (21) to cover the valve (23) and to create a space (27) to accommodate the valve (23) between itself and the valve housing (21), a solenoid (32) is facing an armature (31) secured to the rod (22) and positioned at the opposite side to the header (25) of the valve housing (21), and a spring (33) is constantly pushing the valve (23) away from the valve seat (24), and wherein the fuel supplying passage (34) is reaching near the valve's accommodating space (27) and the rod (22) that connects to this accommodating space (27) at the time of valve's opening.

## Patentansprüche

1. Kraftstoffeinspritzpumpe (1), zumindest mit einem Kompressor (15), der in einen Zylinder (3) eingebaut ist, in den ein Plunger (4) verschieblich eingesetzt ist, mit einem Hochdruckdurchlaß (14), der den Kraftstoff im Kompressor (15) zu einer Düse (10) führt, und mit einem Kraftstoffzuführungsdurchlaß (34), der den von einer Niederdruckkraftstoffeinlaßseite zugeführten Kraftstoff dem Kompressor (15) zuführt, mit einem Magnetventil (20), das in den Kraftstoffzuführungsdurchlaß (34) zwischen der Hochdruckseite und der Niederdruckseite eingebaut und fähig ist, den Durchlaß zwischen der Hochdruck- und Niederdruckseite zu schließen, wobei die Einspritzmenge der Kraftstoffeinspritzpumpe (1) durch Öffnen/Schließen des Magnetventils (20) reguliert wird, wobei diese Kraftstoffeinspritzpumpe (1) weiter aufweist:
ein Soll-Einspritzlevel-Berechnungsmittel (46), um eine Ausgabezeit zu berechnen; ein Treiberimpulsbildungsmittel (200), um während einer Magnetventilschließbewegung einen Treiberimpuls (Dᵣ) zu bilden, der aus einem Treiberimpulssegment (P₀) mit einem großen relativen Einschaltverhältnis während einer ersten Zeitdauer und aus einem Treiberimpulssegment (L₀) mit einem kleinen relativen Einschaltverhältnis in einer folgenden Zeitdauer innerhalb der durch die vorgenannte Ausgabezeit bestimmten Treiberzeitdauer des Magnetventils (20) zusammengesetzt ist;
ein Magnetventiltreibermittel (240), um das Magnetventil (20) durch den von diesem Treiberimpulsbildungsmittel (200) gebildeten Treiberimpuls zu betätigen; ein Stromwellenformdetektormittel (310), um die dem Magnetventil (20) durch dieses Magnetventiltreibermittel (240) zugeführte Stromwellenform zu detektieren; ein Sitzdetektormittel (300), um den Zeitpunkt des Aufsitzens des Magnetventils aus der Stromwellenform zu detektieren; wobei die Detektion des Aufsitzens des Magnetventils definitiv durch den Treiberimpuls mit dem kleinen relativen Einschaltverhältnis während der folgenden Zeitdauer erfolgt.

2. Kraftstoffeinspritzpumpe nach Anspruch 1, wobei die Zeitverzögerung beim Schließen des Ventils (23), die erforderlich ist, um den Kraftstoffzuführungsdurchlaß (34) abzusperren, ermittelt wird, durch Detektion eines Änderungspunktes des dem Elektromagneten (32) zugeführten Stromes, der dann auftritt, wenn das Ventil (23) auf dem Ventilsitz (24) aufsitzt, und durch Zählen der Zeitdauer von dem Zeitpunkt, wenn der Impuls, um das Magnetventil (20) zu betätigen, ausgegeben wird, bis zu dem Zeitpunkt, wenn das Ventil (23) sitzt.

3. Kraftstoffeinspritzpumpe nach Anspruch 1 oder 2, mit einem ersten Generator (220), der den Impuls (P₀) mit einem großen relativen Einschaltverhältnis in spezifischen Zeitintervallen für eine spezifische Zeitspanne erzeugt, und einem zweiten Generator (210), der den Impuls (L₀) mit einem kleineren relativen Einschaltverhältnis als das des von dem ersten Generator (220) erzeugten Impulses (P₀) erzeugt, wobei der von dem zweiten Generator (210) während der Magnetventilbetätigungszeitspanne ausgegebene Impuls (L₀) und der von dem ersten Generator (220) ausgegebene Impuls (P₀) in ein ODER-Gatter (240) eingegeben werden und so eine erzwungene Zeitdauer und eine begrenzte Zeitdauer für den Treiberimpuls (Dᵣ) bilden.

4. Kraftstoffeinspritzpumpe nach Anspruch 3, wobei die erzwungene Zeitdauer des Treiberimpulses (Dᵣ) endet, wenn der dem Elektromagneten (32) zugeführte Strom einen bestimmten Wert überschreitet.

5. Kraftstoffeinspritzpumpe nach einem der voranstehenden Ansprüche, wobei die Ventilschließzeitdauer bestimmt wird, indem ein gewünschter Einspritzlevel basierend auf einem Druckzustand eines Gaspedals und des Motorrotationszustands berechnet wird, indem der berechnete gewünschte Einspritzlevel in einen Nockenwinkel umgewandelt wird, der notwendig ist, um den Einspritzlevel zu erhalten, und indem nachfolgend die Zeit berechnet wird, die für den Nocken erforderlich ist, um über den Nockenwinkel zu rotieren.

6. Kraftstoffeinspritzpumpe nach einem der voranstehenden Ansprüche, wobei das Magnetventil (20) sich auf eine Seite der Einspritzpumpe (1) erstreckend eingebaut ist und eine verschiebbare Stange (22) mit dem Ventil (23) eingefügt ist, ein Ventilgehäuse (21) einen Ventilsitz (24) für das Ventil (23) aufweist, um darauf aufzusitzen, ein Kopf (25) an dem Ventilgehäuse (21) angebracht ist, der das Ventil (23) überdeckt und einen Raum (27) bildet, um das Ventil (23) zwischen sich und dem Ventilgehäuse (21) unterzubringen, ein Elektromagnet (32) einem an der Stange (22) befestigten Anker (31) zugewandt und an der dem Kopf (25) gegenüberliegenden Seite des Ventilgehäuses (21) angeordnet ist und eine Feder (33) das Ventil (23) von dem Ventilsitz (24) permanent wegdrückt, wobei der Kraftstoffzuführungsdurchlaß (34) in die Nähe des Ventilaufnahmeraums (27) und der Stange (22) reicht, der mit dem Aufnahmeraum (27) zur Zeit der Ventilöffnung verbunden ist.

## Revendications

1. Pompe à injection de carburant (1) ayant au moins un compresseur (15) installé à l'intérieur d'un cylindre (3) dans lequel plongeur (4) est inserré de manière glissante, un passage à haute pression (14) guidant le carburant dans ledit compresseur (15) vers un ajutage (10), et un passage d'alimentation de carburant (34) pour alimenter le carburant provenant d'un côté d'admission de carburant à basse pression vers ledit compresseur (15), et une soupape solénoïdale (20), installée sur le passage d'alimentation de carburant (34) entre le côté à haute pression et le côté à basse pression, capable de fermer le passage entre le côté à haute pression et le côté à basse pression, et le montant d'injection de ladite pompe à injection de carburant est ajusté en ouvrant/fermant ladite soupape solénoïdale (20), cette pompe à injection de carburant comprenant en outre:
un calculateur du niveau d'injection désiré (46) pour chronométrer une durée d'émission; une commande de formation de pulsation (200) pour réaliser, pendant un mouvement de fermeture de la soupape solénoïdale, une activité de pulsation (Dᵣ) composée d'un segment de commande de pulsation (Pₒ) ayant un rapport de marche élevé dans un premier temps, et d'une commande de pulsation (Lₒ) ayant un rapport de marche bas dans un temps consécutif, pendant la période de fonctionnement de la soupape solénoïdale qui est déterminé par la durée d'émission susdite;
une commande de soupape solénoïdale (240) pour actionner la soupape solénoïdale (20) au moyen de la commande de pulsation formée par ladite commande de formation de pulsation (200); un détecteur de forme d'onde de courant (310) pour détecter la forme d'onde de courant émises vers la soupape solénoïdale (20) par ladite commande de la soupape solénoïdale (240); un détecteur d'assise (300) pour détecter le moment d'assise de la soupape solénoïdale venant de cette forme d'onde de courant; dans laquelle la détection d'assise de la soupape solénïdale est realiset definitivement par le commande de pulsation ayant un rapport de marche bas dans le temp consécutif.

2. Pompe à injection de carburant comme décrite à la revendication 1, dans laquelle le décalage de temps requis par la soupape (23) pour couper le passage d'alimentation de carburant (34) est déterminé en détectant un point d'inflexion du courant émis au solénoïde (32) qui se produit au moment où la soupape (23) est assise sur l'assise de la soupape (24), et en chronométrant le décalage de temps entre le moment où la pulsation pour actionner la soupape solénoïdale (20) est émise et le moment où la soupape (23) est assise.

3. Pompe à injection de carburant comme décrite à la revendication 1 ou 2, ayant un premier générateur (220) produisant la pulsation (Pₒ) à rapport de marche élevé à des intervalles spécifiques, pour une durée déterminée, et un second générateur (210) produisant la pulsation (Lₒ) ayant un rapport de marche inférieur à celui de la pulsation (Pₒ) produite par ledit premier générateur (220), dans lequel la pulsation (Lₒ) émise par le second génératuer (210) durant le temps de fonctionnement de ladite soupape solénoïdale et la pulsation (Pₒ) émise du premier générateur (220) sont collectées par un circuit OR (240) pour produire une durée élevée et une durée limitée pour la commande de pulsation (Dᵣ).

4. Pompe à injection de carburant comme décrite à la revendication 3, dans laquelle la durée élevée de la commande de pulsation (Dᵣ) se termine quand le courant émis vers le solénoïde (32) dépasse une valeur spécifique.

5. Pompe à injection de carburant comme décrite à l'une quelconque des revendications précédentes, dans laquelle la durée de fermeture de la soupape est déterminée en chronométrant un niveau d'injection désiré sur les bases d'un niveau de pression d'une pédale d'accélération et une condition rotative d'un moteur, en transformant ledit niveau d'injection désiré à un angle de came nécessaire pour obtenir le niveau d'injection et, subséquemment, en chronométrant le temps nécessaire pris par la came afin de tourner par l'angle de came.

6. Pompe à injection de carburant comme décrite à l'une quelconque des revendications précédentes, dans laquelle la soupape solénoïdale (20) s'étend vers le côté de la pompe à injection (1), en admettant une tige (22) comportant la soupape (23) de s'y insérer de manière glissante, un logement de soupape (21) est pourvu d'une assise de soupape (24) pour que la soupape (23) puisse s'y reposer, un chapeau (25) est monté sur le logement de soupape (21) pour couvrir la soupape (23) et pour former une espace (27) pour loger la soupape (23) entre l'espace (27) et le logement de soupape (21), un solénoïde (32) fait façe à une armature (31) fixée à la tige (22) et installé au côté opposé du chapeau (25) du logement de soupape (21), et un ressort (33) repousse constamment la soupape (23) du siège de la soupape (24), et dans lequel le passage d'alimentation de carburant (34) s'étend vers l'espace de logement (27) pour la soupape et la tige (22) qui communique avec l'espace de logement (27) quand la soupape est ouverte.
